(19) Europäisches Patentamt
European Patent Office
Office européen des brevets

(11) EP 4 487 947 A1

(12) # EUROPÄISCHE PATENTANMELDUNG

(43) Veröffentlichungstag:
**08.01.2025 Patentblatt 2025/02**

(21) Anmeldenummer: **24185345.6**

(22) Anmeldetag: **28.06.2024**

(51) Internationale Patentklassifikation (IPC):
***B01J 20/18*** *(2006.01)* ***B01D 53/04*** *(2006.01)*
***B01D 53/62*** *(2006.01)* ***B01J 20/20*** *(2006.01)*
***B01J 20/24*** *(2006.01)* ***B01J 20/26*** *(2006.01)*
***B01J 20/30*** *(2006.01)* ***B01J 20/32*** *(2006.01)*

(52) Gemeinsame Patentklassifikation (CPC):
**B01J 20/183; B01D 53/02; B01D 53/04; B01D 53/62; B01J 20/20; B01J 20/24; B01J 20/262; B01J 20/3078; B01J 20/3204; B01J 20/324; B01J 20/3246; B01J 20/3293;**
B01D 2253/25; B01D 2257/504

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **30.06.2023 DE 102023117330**

(71) Anmelder: **Volkswagen Aktiengesellschaft
38440 Wolfsburg (DE)**

(72) Erfinder:
- **Abdel-Mageed, Ali
18106 Rostock (DE)**
- **Wotzka, Alexander
18057 Rostock (DE)**
- **Stöhr, Marion
12524 Berlin (DE)**
- **Wohlrab, Sebastian
18311 Ribnitz-Damgarten (DE)**
- **Schütz, Christine
38533 Vordorf (OT Rethen) (DE)**
- **Rüggeberg, Marc
38124 Braunschweig (DE)**
- **Maas, Christian
38179 Schwülper (DE)**
- **Block, Gerald
38165 Lehre (DE)**
- **Grote, Andreas
38176 Wendeburg (DE)**

(74) Vertreter: **MFG Patentanwälte
Meyer-Wildhagen Meggle-Freund
Gerhard PartG mbB
Amalienstraße 62
80799 München (DE)**

(54) **SORPTIONSMATERIAL UMFASSEND ZEOLITHPARTIKEL, VERFAHREN ZU DESSEN HERSTELLUNG, SOWIE VERFAHREN ZUR SORPTION VON KOHLENDIOXID UNTER EINSATZ BESAGTEN SORPTIONSMITTELS**

(57) Vorliegend wird ein Sorptionsmaterial umfassend Zeolithpartikel mit hydrophober Beschichtung beschrieben. Ferner werden ein Verfahren zur Herstellung eines Sorptionsmaterials umfassend Zeolithpartikel mit hydrophober Beschichtung, eine Verwendung eines Sorptionsmaterials und ein Verfahren zur Sorption von Kohlendioxid beschrieben.

400
410
411

Fig. 17

EP 4 487 947 A1

## Beschreibung

Die Erfindung betrifft ein Sorptionsmaterial, ein Verfahren zur Herstellung eines Sorptionsmaterials, die Verwendung des Sorptionsmaterials und ein Verfahren zur Sorption von Kohlendioxid.

Die Emission von Kohlendioxid in die Atmosphäre gilt aktuell als wesentlicher Treiber des Klimawandels. Kohlenstoffabscheidungs- und Speichertechniken (Carbon Capture and Storage - CCS) sind effiziente und effektive Methoden zur Reduzierung der Kohlendioxidemissionen in die Atmosphäre.

Die katastrophalen Klimaveränderungen, die mit dem Anstieg der Kohlendioxidkonzentration in der Atmosphäre einhergehen, stellen Industrie und Wissenschaft vor nie dagewesene Herausforderungen. Gemäß dem Pariser Abkommen sind diese Auswirkungen in absehbarer Zukunft nur dann vermeidbar, wenn die globale Erwärmung deutlich unter 2°C gehalten werden kann (Horowitz, C. A. Paris Agreement, International Legal Materials 2016, 55 (4), 740-755). Dieses Ziel ist nur durch die Sequestrierung und das Recycling von mindestens 10 Gt $CO_2$ pro Jahr bis zum Jahr 2050 zu erreichen (Mac Dowell, N.; Fennell, P. S.; Shah, N.; Maitland, G. C.: "The role of CO2 capture and utilization in mitigating climate change", Nature Climate Change 2017, 7 (4), 243-249.)

Durch die Kopplung der DAC-Technologie (direct air capture) mit der grünen Wasserstofftechnologie kann $CO_2$ als künftiger Baustein für die Herstellung einer breiten Palette von Plattformchemikalien (z. B. Methanol oder Synthesegas) und grünen Kraftstoffen betrachtet werden und würde den Übergang von der fossilen Wirtschaft zu einer Kreislaufwirtschaft erleichtern, die auf der Einbindung von $CO_2$ in einen geschlossenen Kreislauf beruht (d. h. eine Kreislaufwirtschaft) (Schlögl, R.: "Chemical Batteries with CO2", Angewandte Chemie International Edition 2022, 61 (7), e202007397).

Interessant ist deshalb die Entwicklung eines selektiven Adsorptionsmittels, das in der Lage ist, $CO_2$ aus der Umgebungsluft abzuscheiden (d. h. selektive Abscheidung von $CO_2$ in Gegenwart von Umgebungsfeuchtigkeit).

Untersucht wurde deshalb die Modifizierung von handelsüblichen Zeolithen (13X-Gerüst) durch thermische Pyrolyse und chemische Funktionalisierung.

Die Pyrolyse wird in der Literatur für die Synthese oder Modifizierung von Membranmaterialien für die Gastrennung beschrieben (Jung, C. H.; Kim, G. W.; Han, S. H.; Lee, Y. M. Gas separation of pyrolyzed polymeric membranes: Effect of polymer precursor and pyrolysis conditions. Macromolecular Research 2007, 15 (6), 565-574. DOI: 10.1007/bf03218832; Shi, L.; Lai, L. S.; Tay, W. H.; Yeap, S. P.; Yeong, Y. F. Membrane Fabrication for Carbon Dioxide Separation: A Critical Review. ChemBioEng Reviews 2022, 9 (6), 556-573. DOI: 10.1002/cben.202200035), jedoch meist für allgemeine Anwendungen wie die $N_2/CO_2$-Trennung, oder die $CH_4/CO_2$-Trennung als Teil von Technologien zur Kohlenstoffabscheidung und -speicherung getestet (Anderson, C. J.; Pas, S. J.; Arora, G.; Kentish, S. E.; Hill, A. J.; Sandler, S. I.; Stevens, G. W. Effect of pyrolysis temperature and operating temperature on the performance of nanoporous carbon membranes. Journal of Membrane Science 2008, 322 (1), 19-27. DO!: 10.1016/j.memsci.2008.04.064), jedoch nicht direkt für die Zwecke der DAC-Technologie.

Über die chemische Modifizierung von Zeolithen wurde für eine Reihe von Ausgangsstoffen berichtet, darunter Aminosilane (Switzer, J. R.; Ethier, A. L.; Hart, E. C.; Flack, K. M.; Rumple, A. C.; Donaldson, J. C.; Bembry, A. T.; Scott, O. M.; Biddinger, E. J.; Talreja, M.; et al. Design, synthesis, and evaluation of nonaqueous silylamines for efficient CO2 capture. ChemSusChem 2014, 7 (1), 299-307. DOI: 10.1002/cssc.201300438 From NLM Medline), oder Trichlorsilane (Luebke, D.; Myers, C.; Pennline, H. Hybrid Membranes for Selective Carbon Dioxide Separation from Fuel Gas. Energy & Fuels 2006, 20 (5), 1906-1913. DOI: 10.1021/ef060060b). Alkoxysilane sind in der Literatur für die Abtrennung von Kohlendioxid aus Helium beschrieben, aber bisher nicht für die DAC-Anwendung.

Bekannte Verfahren zum Einfangen von Kohlendioxid sind Absorption, Adsorption, Membranbasierte Systeme, elektrochemische Separation und kryogene Trennung. Die Absorption von Kohlendioxid in ein wässriges Lösungsmittel kann zur Reinigung von Abgasen aus Kraftwerken und Industrieanlagen verwendet werden.

Die Sorption von Kohlendioxid erfolgt meist durch geeignete Sorptionsmaterialien, die Kohlendioxid gut adsorbieren und desorbieren können. Häufig weisen derartige Sorptionsmaterialien allerdings eine gewisse Unbeständigkeit gegenüber weiteren, in der Umwelt vorhandenen Verbindungen auf und/oder bevorzugen die Adsorption z. B. von Wasser gegenüber der Adsorption von Kohlendioxid.

Ein weiteres häufig auftretendes Problem bei der Desorption von Kohlendioxid von Sorptionsmaterialien ist die für die Desorption benötigte hohe Temperatur. Dadurch kann es zu Schäden am Sorptionsmaterialien kommen und/oder ein hoher Energieeintrag vonnöten sein.

Aufgabe der vorliegenden Erfindung ist es, ein Sorptionsmaterial bereitzustellen, das die oben genannten Nachteile wenigstens teilweise überwindet.

Ferner ist es Aufgabe der vorliegenden Erfindung, ein Verfahren zur Herstellung eines Sorptionsmaterial zur Verfügung zu stellen, das die oben genannten Nachteile wenigstens teilweise überwindet.

Weiter ist es Aufgabe der vorliegenden Erfindung, ein Verfahren zur Sorption von Kohlendioxid zur Verfügung zu stellen, das die oben genannten Nachteile wenigstens teilweise überwindet.

Diese Aufgabe wird durch das erfindungsgemäße Sorptionsmaterial nach Anspruch 1, dem Verfahren nach Anspruch 4 und dem Verfahren nach Anspruch 13 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Sorptionsmaterial umfasst Zeolithpartikel mit hydrophober Beschichtung. Zeolithpartikel mit hydrophober Beschichtung werden hierin auch als modifizierte Zeolithpartikel bzw. modifizierte Zeolithe bezeichnet. Zeolithe bzw. Zeolithpartikel, die keine Beschichtung aufweisen, werden hierin dementsprechend als unmodifiziert bezeichnet.

Unter einem Sorptionsmaterial kann eine Verbindung verstanden werden, das einen Stoff adsorbieren und vorzugsweise auch desorbieren kann. In einer bevorzugten Ausführungsform handelt es sich bei dem Stoff, der adsorbiert und vorzugsweise auch desorbiert wird, um Kohlendioxid.

Bei den Zeolithpartikeln kann es sich um Zeolithpartikel einer Art oder unterschiedlicher Arten handeln.

Die Zeolithpartikel können nach ihrer Porengröße und/oder ihrer spezifischen Oberfläche eingeteilt werden. Beispielhafte Zeolithe sind Zeolith 13X, Zeolith 5A, Zeolith 4A, Zeolith 3 A, MFI-Zeolithe.

Die Zeolithpartikel können eine definierte Partikelgröße aufweisen. Vorzugsweise haben die Zeolithpartikel eine Größe von 1 bis 8 mm, weiter bevorzugt 1 bis 5 mm, weiter bevorzugt 2 bis 4 mm.

Erfindungsgemäße Sorptionsmaterialien umfassen Zeolithpartikel mit hydrophober Beschichtung. Die Beschichtung kann eine Dicke im Bereich von 0,4 bis 10000 nm, bevorzugt im Bereich von 0,8 bis 5000 nm, weiter bevorzugt im Bereich von 1 bis 1000 nm aufweisen.

Die hydrophobe Beschichtung kann ausgewählt sein aus Polymeren, Kohlenstoffmodifikationen, wie z. B. Graphit und/oder Silan.

Vorzugsweise sind die Zeolithpartikel zu mindestens 0,1 %, weiter bevorzugt zu mindestens 0,2 %, noch weiter bevorzugt zu mindestens 0,5 % mit der hydrophoben Beschichtung beschichtet. In Ausführungsformen sind die Zeolithpartikel zu mindestens 5 % mit der hydrophoben Beschichtung beschichtet. In weiteren Ausführungsformen sind die Zeolithpartikel zu mindestens 8 % mit der hydrophoben Beschichtung beschichtet. Es gibt Ausführungsformen, bei denen der Zeolithpartikel vollständig mit der hydrophoben Schicht beschichtet ist.

Ferner ist Gegenstand der vorliegenden Erfindung ein Verfahren zur Herstellung eines Sorptionsmaterials umfassend Zeolithpartikel mit hydrophober Beschichtung umfassend die Schritte:

- Vorlegen von Zeolithpartikel,
- Inkontaktbringen der Zeolithpartikel mit mindestens einem organischen Polymer und/oder mit mindestens einem Silan.

In einem ersten Schritt eines erfindungsgemäßen Verfahrens werden Zeolithpartikel vorgelegt. Bei den Zeolithpartikeln kann es sich um Zeolithpartikel, wie hierin beschrieben, handeln. Es können in einem erfindungsgemäßen Verfahren Zeolithpartikel einer Art oder Zeolithpartikel unterschiedlicher Arten eingesetzt werden.

In einer Ausführungsform kann der Zeolithpartikel ausgewählt sein aus der Gruppe bestehend aus 13X-Zeolith, 5A-Zeolith, 4A-Zeolithe und MFI-Zeolithe.

In einem weiteren Verfahrensschritt werden die Zeolithpartikel mit mindestens einem organischen Polymer und/oder mit mindestens einem Silan in Kontakt gebracht.

Bei dem organischen Polymer kann es sich um ein kohlenstoffhaltiges Polymer handeln. Das kohlenstoffhaltige Polymer weist vorzugsweise mindestens eine aromatische Verbindung auf. Bei der aromatischen Verbindung kann es sich um ein Phenyl ($-C_6H_5$) handeln. In einer Ausführungsform kann es sich bei dem organischen Polymer somit um ein phenylhaltiges Polymer handeln.

Das organische Polymer kann ausgewählt sein aus der Gruppe bestehend aus Polystyrol, Polypropylen, Polyethylen, Polyannilin, Polyoxymethylene, PTFE, Polyvinylpyridin, Polyamide, Polymethmethacrylat, Polyole, Cellulose, Polymilchsäure, Polyhydroxybutyrat, Polybutadien und Mischungen davon.

Das organische Polymer kann in einem Lösungsmittel vorliegen. Das organische Polymer kann in einer Konzentration in einem Verhältnis im Bereich 0,01 bis 20 %, insbesondere im Bereich 0,5 bis 20 %, bevorzugt im Bereich 0,2 % bis 10 %, noch weiter bevorzugt im Bereich 0,3 % bis 8 % vorliegen.

Die Zeolithpartikel und das mindestens eine organische Polymer und/oder Silan werden vorzugsweise in einem Verhältnis 98:2, weiter bevorzugt 99:0,1, noch weiter bevorzugt 99,5:0,5 in Kontakt gebracht.

Das Silan kann ausgewählt sein aus der Gruppe bestehend aus Trichlorsilan, Alkoxysilane und Aminosilane.

Die Zeolithpartikel und das mindestens eine organische Polymer und/oder Silan können in einem geeigneten Lösungsmittel in Kontakt gebracht werden. Bei dem Lösungsmittel handelt es sich vorzugsweise um ein organisches Lösungsmittel, weiter bevorzugt handelt es sich bei dem organischen Lösungsmittel um ein getrocknetes organisches Lösungsmittel.

Ein erfindungsgemäßes Verfahren kann ferner den Schritt der Pyrolyse umfassen. Bei dem Verfahren werden vorzugsweise die Zeolithpartikel und das mindestens eine organische Polymer und/oder das mindestens eine Silan pyrolisiert. Besonders bevorzugt werden die Zeolithpartikel und das mindestens eine organische Polymer pyrolisiert.

Die Pyrolyse erfolgt vorzugsweise durch Erhitzen auf eine Temperatur >300 °C, vorzugsweise >500 °C, weiter bevorzugt >600 °C.

Die Pyrolyse erfolgt vorzugsweise unter Ausschluss von Sauerstoff. In einer bevorzugten Ausführungsform wird die Pyrolyse unter Inertgasatmosphäre durchgeführt. Bei der Inertgasatmosphäre kann es sich um eine Stickstoffatmosphäre, $CO_2$-Atmosphäre oder Argonatmosphäre handeln.

Ein erfindungsgemäßes Verfahren kann ferner den Schritt des Trocknens der Zeolithpartikel und des mindestens einen organischen Polymers und/oder des mindestens einen Silans umfassen.

Das Trocknen kann bei einer Temperatur ≥50°C, weiter bevorzugt ≥80°C, noch weiter bevorzugt ≥100°C stattfinden.

Ferner ist Gegenstand der vorliegenden Erfindung ein Sorptionsmaterial hergestellt nach einem erfindungsgemäßen Verfahren.

Weiter ist Gegenstand der vorliegenden Erfindung die Verwendung eines Sorptionsmaterials, wie hierin beschrieben, zur Adsorption von Kohlendioxid. Vorzugsweise eignet sich das Sorptionsmittel auch zur Desorption von Kohlendioxid.

Ein erfindungsgemäßes Sorptionsmaterial kann in einem DAC-Verfahren (direct air capture), in der chemischen Industrie, in der Erdölindustrie, bei Emittenten von $CO_2$ (Aluhütte, Zementwerk, Kraftwerke, etc.) verwendet werden. So gewonnenes $CO_2$ kann beispielsweise ganz allgemein als Grundstoff in der chemischen Synthese, oder für die Herstellung von e-Fuels eingesetzte werden.

Ferner ist Gegenstand der vorliegenden Erfindung ein Verfahren zur Sorption von Kohlendioxid umfassend den Schritt:

- Adsorption von Kohlendioxid durch Inkontaktbringen mindestens eines Sorptionsmaterials wie hierin beschrieben mit Kohlendioxid.

Das Verfahren zur Sorption von Kohlendioxid kann ein DAC-Verfahren sein.

Bei einem erfindungsgemäßen Verfahren kann in einer geeigneten Vorrichtung das Sorptionsmaterial mit einem gasförmigen Medium umfassend Kohlendioxid in Kontakt gebracht werden. Bei dem gasförmigen Medium kann es sich um Atmosphäre, Umgebungsluft, Abgase, Gas aus Punktquellen, etc. handeln.

Ein erfindungsgemäßes Verfahren kann ferner den Schritt der Desorption von Kohlendioxid durch Erwärmen des mindestens einen Sorptionsmaterials mit adsorbiertem Kohlendioxid umfassen.

Das Erwärmen kann auf eine Temperatur >30°C, vorzugsweise >50°C, weiter bevorzugt >80°C erfolgen.

Erfindungsgemäße Sorptionsmaterialien weisen vorzugsweise eine hohe Selektivität gegenüber $CO_2$ im Vergleich zu $H_2O$ auf. Bei einem Einsatz z. B. bei der Sorption von Kohlendioxid, wie in DAC-Verfahren, kann so erreicht werden, dass im Vergleich zu $H_2O$ mehr $CO_2$ adsorbiert werden kann. Dies ist insbesondere bei der Vorbereitung der Verfahrensströme (z. B. einer Vortrocknung) für COz-Adsorptionsverfahren als auch der Regeneration von Sorptionsmaterialien interessant.

Erfindungsgemäße Sorptionsmaterialien weisen auch eine gute Robustheit auf und so kann ein langlebiger Einsatz in diversen Sorptionsverfahren von Interesse sein.

Ausführungsbeispiele der Erfindung werden nun beispielhaft und unter Bezugnahme auf die beigefügten Zeichnungen beschrieben, in denen:

Fig. 1 schematisch die Darstellung eines Adsorptionsaufbaus, der bei der dynamischen Adsorptionsmessung für die direkte Luftabscheidung aus Luft (mit 400 ppm $CO_2$) und in Abwesenheit bzw. in Anwesenheit von Luftfeuchtigkeit verwendet werden kann,

Fig. 2 schematisch die Schritte des Verfahrens (Adsorption, Sättigung, und Desorption),

Fig. 3a das Ergebnis der dynamischen Adsorptionsmessung für die direkte Luftabscheidung aus feuchter und wasserfreier Luft (mit 400 ppm $CO_2$) am unmodifizierten 13X-Zeolithen mit einer Porengröße von 10Å bei 5°C,

Fig. 3b das Ergebnis der dynamischen Adsorptionsmessung für die direkte Wasseraufnahme aus feuchter und wasserfreier Luft am unmodifizierten 13X-Zeolithen mit einer Porengröße von 10Ä bei 5°C,

Fig. 4 die $CO_2$-Aufnahmekapazität der unmodifizierten und modifizierten zeolithischen Materialien, bei der trockenen und feuchten Adsorption von $CO_2$,

Fig. 5 die $H_2O$-Durchbruchzeiten der unmodifizierten und modifizierten Materialien (13X-Zeolith, 13X-Zeolith mit 0,5 Gew% ETS und 13X-Zeolith mit 0,5 Gew% PST), bei der $CO_2$-Adsortpion,

Fig. 6 den Selektivitätsfaktor als Funktion des Drucks für modifizierten (ETS und PS modifizierten 13X) und nicht modifizierten 13X-Zeolith,

Fig. 7 die in situ gemessene Röntgendiffraktion zur Strukturbestimmung während des Aufheizens in Stickstoff (5°C min-1) von 25 auf 450°C,

Fig. 8 die in situ gemessene Röntgendiffraktion zur Strukturbestimmung während des Aufheizens in Stickstoff (5°C min-1) von 25 auf 450°C,

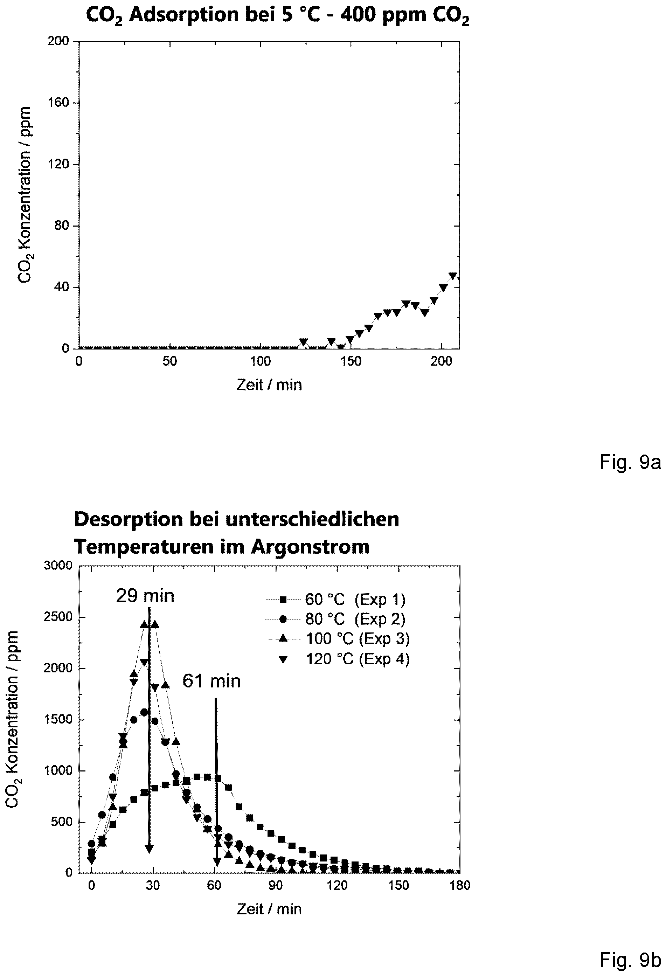

Fig. 9a die $CO_2$-Adsorption bei 5°C am 13X-Zeolithen bei einer $CO_2$-Konzentration von 400 ppm,

Fig. 9b die $CO_2$-Desorption bei 5°C am 13X-Zeolithen im Luftfluss bei verschiedenen Temperaturen,

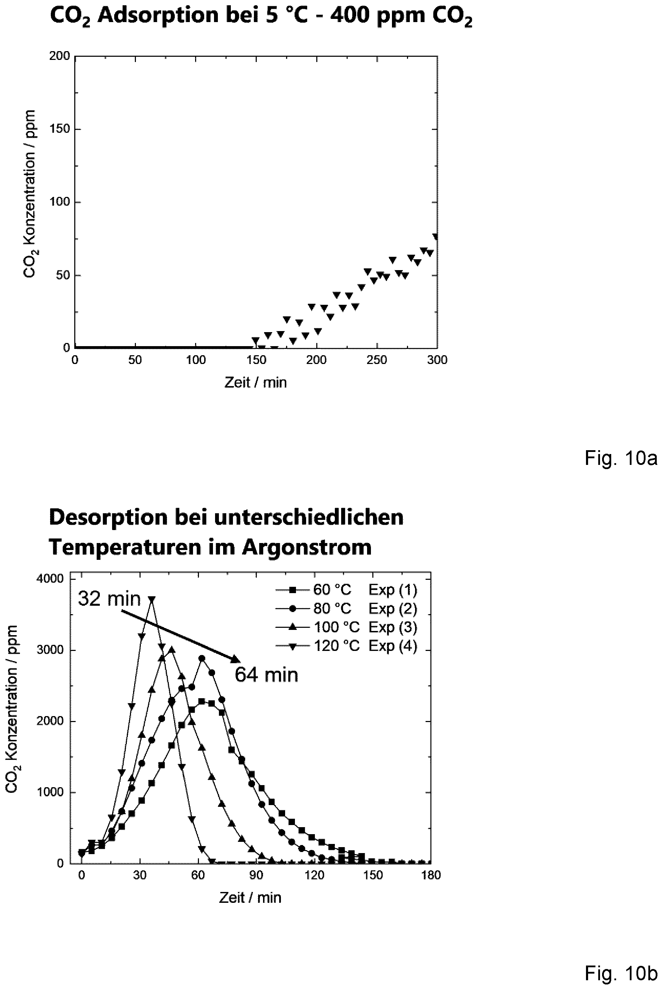

Fig. 10a die $CO_2$-Adsorption bei 5°C am 13X-Zeolithen mit einer Porengröße von 5Å bei einer $CO_2$-Konzentration von 400 ppm,

Fig. 10b die $CO_2$-Desorption bei 5°C am 13X-Zeolithen mit einer Porengröße von 5Å im Luftfluss bei verschiedenen Temperaturen,

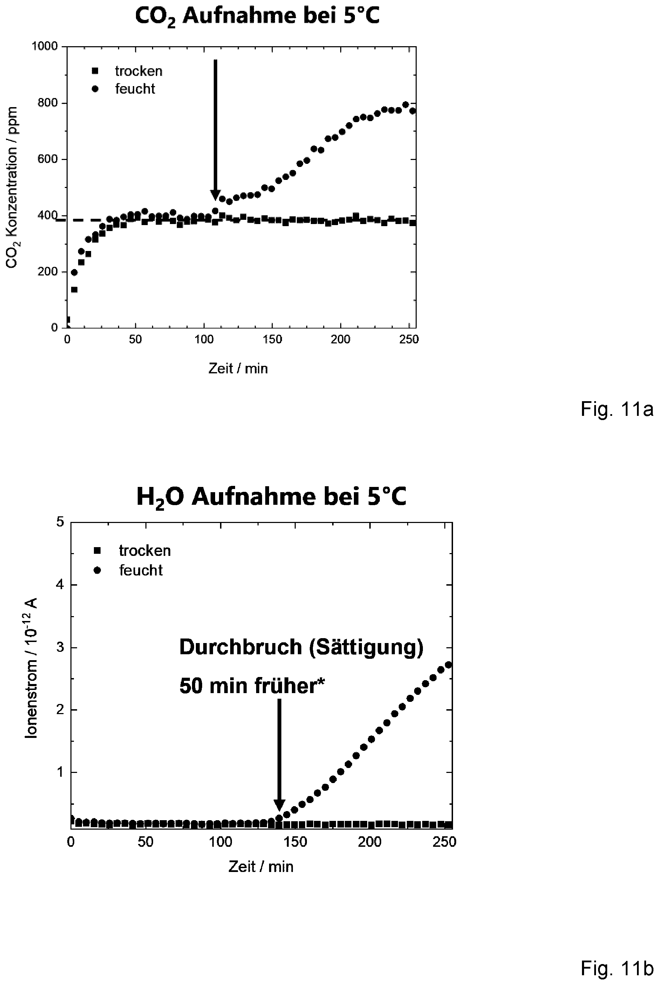

Fig. 11a die $CO_2$-Aufnahme bei 5°C am 13X-Zeolithen, modifiziert mit 0,5 Gew.% Polystyrol (PS) aus wasserfreier und wasserenthaltender Luft,

Fig. 11b die $H_2O$-Aufnahme bei 5°C am 13X-Zeolithen, modifiziert mit 0,5 Gew.% Polystyrol (PS) aus wasserfreier und wasserenthaltender Luft,

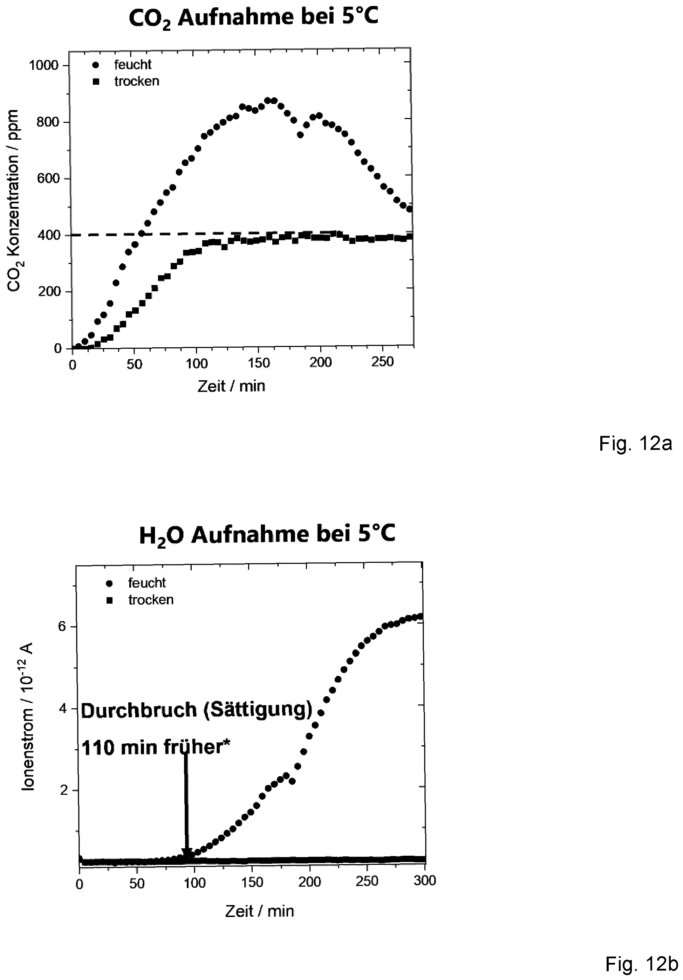

Fig. 12a die $CO_2$-Aufnahme bei 5°C am 13X-Zeolithen, modifiziert mit 0,5 Gew.% Trichloroethylsilan (ETS) aus wasserfreier und wasserenthaltender Luft,

Fig. 12b die $H_2O$-Aufnahme bei 5°C am 13X-Zeolithen, modifiziert mit 0,5 Gew.% Trichloroethylsilan (ETS) aus wasserfreier und wasserenthaltender Luft,

Fig. 13a die $H_2O$-BET an 13X-Zeolith und an 13X-Zeolith modifiziert mit 0,5 Gew.% Polystyrol,

Fig. 13b die $CO_2$-BET an 13X-Zeolith und an 13X-Zeolith modifiziert mit 0,5 Gew.% Polystyrol,

Fig. 14 schematisch ein Verfahren zur Herstellung eines Sorptionsmaterials,

Fig. 15 schematisch ein Verfahren zur Sorption von Kohlendioxid,

Fig. 16 eine Übersicht der Modifizierung von Zeolithen zur Adsorption von $CO_2$, und

Fig. 17 schematisch einen Zeolithpartikel mit hydrophober Beschichtung, zeigen.

1. Beschreibung der Synthese

1.1 Synthese 13X-Zeolith-ETS (13X-Zeolith-ODTS; ODTS=Trichlor(octadecyl)silan)

| | |
|---|---|
| Einwaagen | 20 g 13X-Zeolith |
| | 200 ml Toluol |
| | 3,27 g Trichloroethylsilan (7,76 g Trichlor(octadecyl)silan) |

13X-Zeolith wurde für mindestens 12 h im Vakuum-Trockenschrank bei 200°C im Rundkolben getrocknet; die obere Schicht Zeolith ist dunkelbraun, darunter hellbraun.

Der Rundkolben wurde mit trockenem Stickstoff durchströmt.

Es wurden 190ml Toluol mittels einer Einwegspritze zum 13X-Zeolith unter Rühren zugegeben.

Das Silan (1 mmol/g Zeolith) wurde in einer Spritze mit 10 ml Toluol gemischt und zum 13X-Zeolith/Toluol Gemisch zugegeben, anschließend wurde die Mischung bei Raumtemperatur für 24 h langsam gerührt.

Das Gemisch wurde über einen Faltenfilter filtriert, 3x mit ~100ml Ethanol gewaschen und filtriert. Die so modifizierten APGIII Formkörper wurden anschließend bei 100 °C im Vakuum-Trockenschrank getrocknet.

1.2. Synthese 13X-Zeolith-PS

| Einwaagen | 20 g 13X-Zeolith |
| --- | --- |
| | 8 g 2 %ige Polystyrollösung in n-Butylacetat (Polystyrol Mw 35.000) |

13X-Zeolith wurde für mindestens 12 h im Vakuum-Trockenschrank bei 200°C im Rundkolben getrocknet; die obere Schicht Zeolith war dunkelbraun, darunter hellbraun.

Der Rundkolben wurde mit trockenem Stickstoff durchströmt.

Das 13X-Zeolith wurde tropfenweise mit der Polystyrollösung imprägniert und das Gemisch wurde mit einem Spatel gerührt. Dabei erhitzte sich das Gemisch zu Beginn stark.

Die so modifizierten 13X-Zeolith-Formkörper wurden anschließend zuerst bei Raumtemperatur, danach für 8 h bei 50 °C im Vakuum-Trockenschrank getrocknet.

Für die Synthese der pyrolysierten Probe wurde ein Teil der 13X-Zeolith-PS-2% Probe für 2 h bei 600 °C in Stickstoff pyrolisiert (Heizrate 5 °C).

1.3 Analyse der hergestellten Materialien

Messungen am unbehandelten 13X-Zeolith zeigten eine Oberfläche von 640,9 $m^2$/g (BET-Methode) bei einem Mikroporenvolumen von 612,1 $m^2$/g (t-Plot).

2.Dynamische Messung der $CO_2$-Abscheidung

2.1. Der Adsorptions-/Desorptionsaufbau

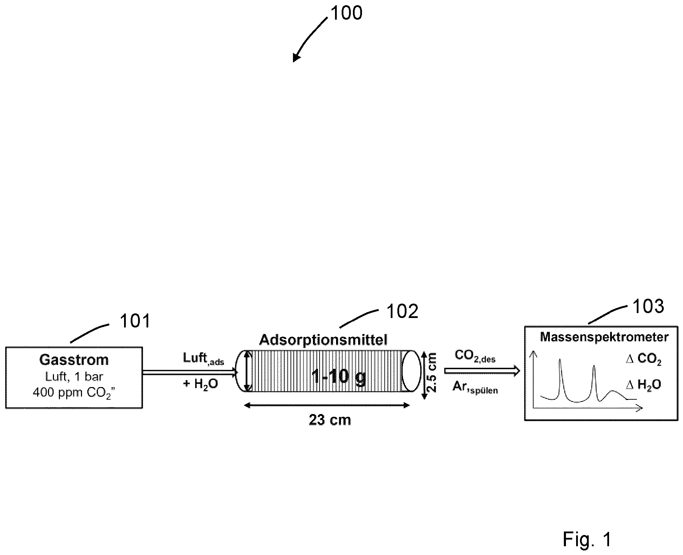

Der Aufbau für die dynamischen Adsorptions-/Desorptionsmessungen besteht aus den folgenden Teilen (wie auch schematisch in Fig. 1 dargestellt):

- Gasversorgungseinheit zur Zufuhr des Adsorptionsgemischs für die Messungen und des für die Trocknung verwendeten Gases.
- Rohrreaktor, in dem das Sorptionsmaterial gepackt wird.
- Analyseeinheit (Massenspektrometer), die am Ausgang des Rohrreaktors für die Analyse angeschlossen ist.
- Wassersättiger zur Befeuchtung des Adsorptionsgases (Luft) für die realistischen Adsorptionsmessungen.

Fig. 1 zeigt schematisch die Darstellung eines Adsorptionsaufbaus 100, der bei der dynamischen Adsorptionsmessung für die direkte Luftabscheidung aus Luft (mit 400 ppm $CO_2$) und in Abwesenheit bzw. in Anwesenheit von Luftfeuchtigkeit verwendet werden kann. Der Adsorptionsaufbau 100 weist einen Gasfluss 101 (Luft, 1 bar, 400 ppm $CO_2$) auf. Der Gasfluss 101 umfasst neben Luft auch $H_2O$. Der Gasfluss wird durch eine Vorrichtung umfassend Sorptionspartikel 102 (z. B. ein Rohrreaktor) geleitet. Die Vorrichtung kann einen Durchmesser von 2,5 cm aufweisen. Die Sorptionspartikel adsorbieren $CO_2$ und $H_2O$. Anschließend wird das $CO_2$ und das $H_2O$ desorbiert und der erhaltene Massefluss wird in einem Massenspektrometer 103 analysiert.

2.2. Experimentelle Ansatz

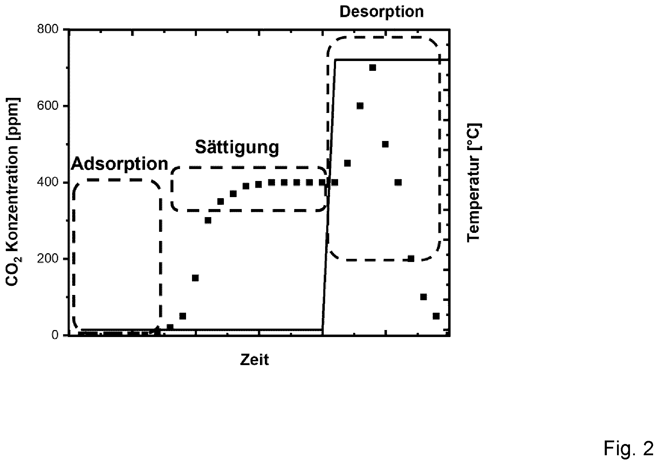

Zur Bewertung der Adsorptionseigenschaften der modifizierten zeolithischen Materialien wurde die folgende Reihenfolge angewandt (Adsorption, Sättigung und die Desorption sind in Fig. 2 gezeigt):
Die Probe wurde in den Röhrenmikroreaktor geladen und unter einem Ar-Strom streng getrocknet, um alles voradsorbierte Wasser und $CO_2$ zu desorbieren.

Die Reaktortemperatur wurde auf 5 °C gesenkt, bei der die Desorptionsmessungen durchgeführt wurden.

Die Adsorption wurde bis zur Sättigung durchgeführt, wobei der $CO_2$-Gehalt am Ausgang des Reaktors 400 ppm beträgt.

Nach der Sättigung wurde der Desorptionsschritt (Sammlung von $CO_2$) bei 120 °C unter einem Ar-Strom durchgeführt.

Der vorherige Schritt wurde so lange durchgeführt, bis im austretenden Gasstrom kein $CO_2$ mehr zu finden war.

Alternativ zu einem Ar-Strom kann auch ein $N_2$-Strom verwendet werden.

2.3. Ergebnisse der $CO_2$ Adsorption / Desorption für modifizierten 13X-Zeolithe

2.3.1 Dynamische Adsorption/ Desorption Messungen:

Um die Auswirkung der Modifizierung des Zeoliths auf die Adsorptionskapazität für $CO_2$ und Wasser und damit auf die Adsorptionsselektivität gegenüber Wasser zu untersuchen, wurde das Adsorptionsexperiment in rein trockener Luft (wasserfrei) und einmal in feuchter Luft durchgeführt.

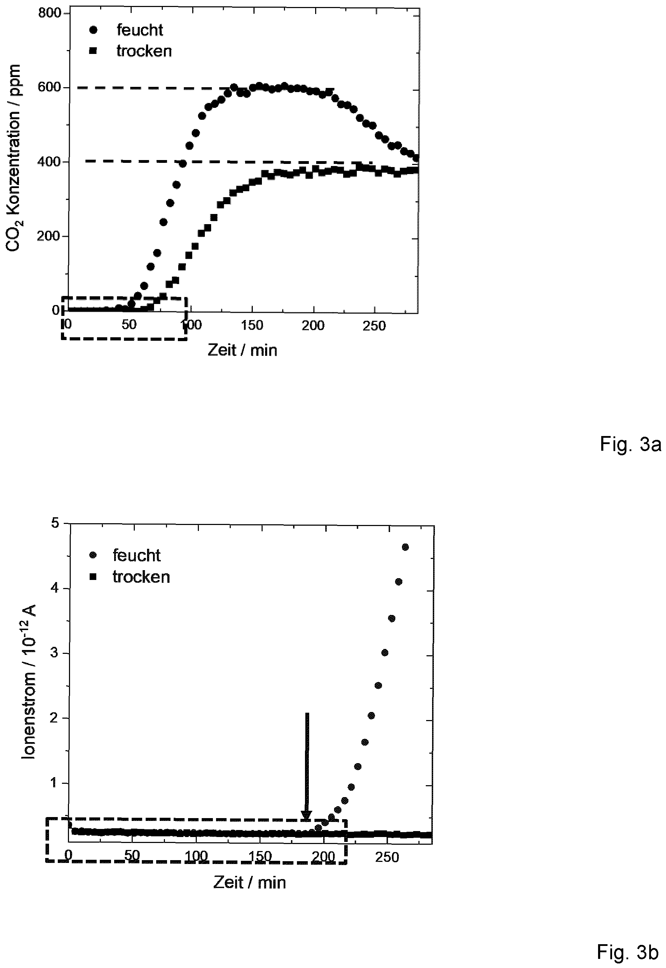

Die Adsorptionseigenschaften der zeolithischen Materialen (unmodifizierten und modifiziert) wurde, wie in 2.2 beschrieben durchgeführt, in Fig. 3a ist die Adsorption von $CO_2$ am unmodifizierten 13X-Zeolith dargestellt. Dabei wird deutlich beobachtet:

- Die Wassercoadsorption verringert die Aufnahme von $CO_2$, durch Besetzung der Adsorptionszentren
- Die bevorzugte Adsorption des Wassers führt bei zunehmender Sättigung zu einer Verdrängung des bereits adsorbierten $CO_2$.

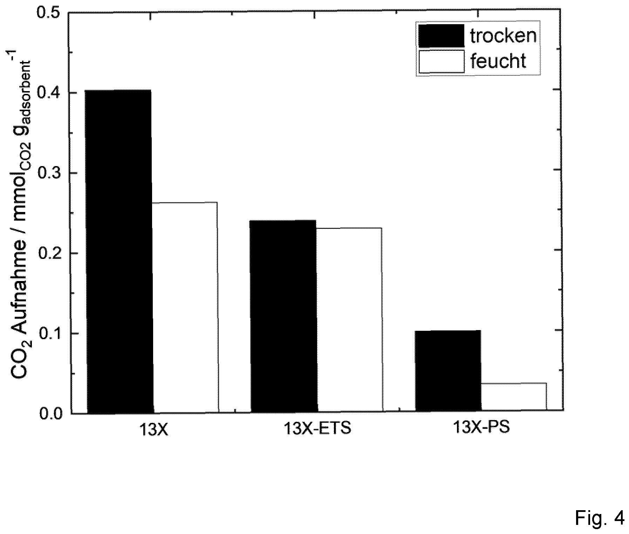

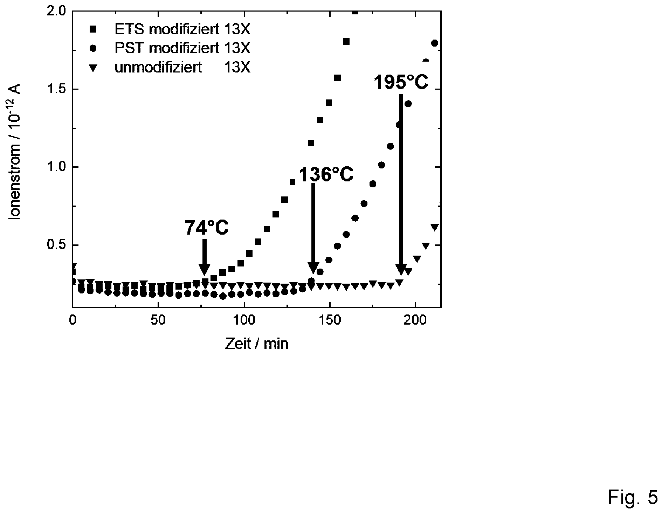

Ein Vergleich der $CO_2$-Aufnahme unter trockenen und feuchten Bedingungen ist für die Materialien in Fig. 4 dargestellt. Hieran wurde gezeigt, dass die Modifikationen mit Trichloroethylsilan (ETS) und Polysterol (PS) zu einer Verringerung der $CO_2$ Aufnahmekapazität des Materials führte. Die Wassercoadsorption führte zu einer Verringerung der $CO_2$ Aufnahme. Die Modifikationen führten ebenfalls zu einer signifikanten Veränderung der $H_2O$-Aufnahme wie Fig. 5 zeigt.

Die Modifikationen setzten ebenfalls die $H_2O$ Aufnahmekapazität herab.

2.3.2. Selektivitätsfaktor als indirektes Maß für die Bestimmung der $CO_2/H_2O$ Selektivität:

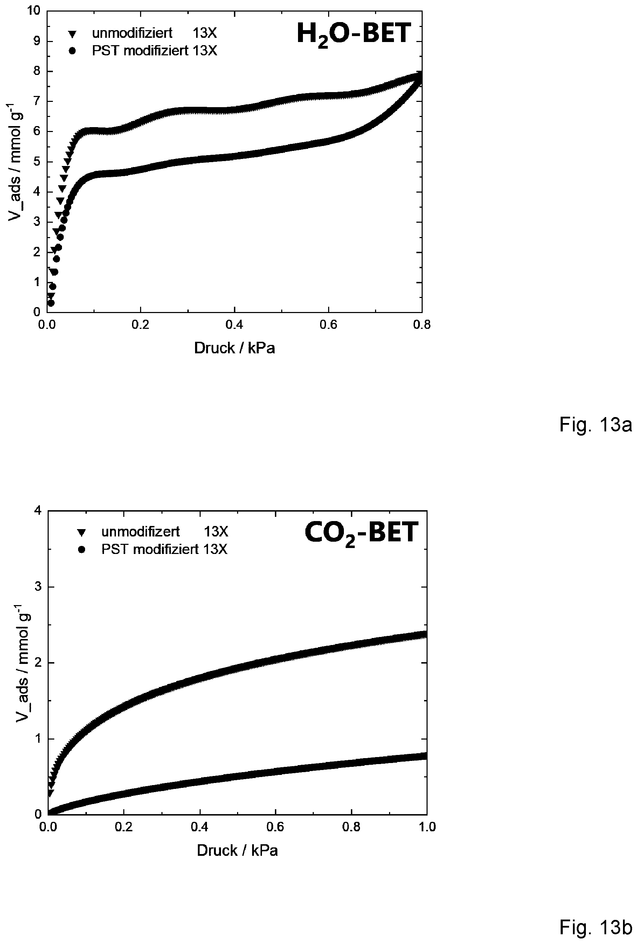

Als direktes Maß für die Selektivität der Wasseradsorption wurde die Druckabhängigkeit der Wasser- und $CO_2$-Adsorption für die unmodifizierten und modifizierten Proben gemessen (d. h. es wurden $H_2O$- und $CO_2$-BET-Messungen durchgeführt; Fig. 13a und 13b).

Es wurde ein Selektivitätsfaktor auf der Grundlage des Verhältnisses zwischen der adsorbierten $CO_2$-Menge und der adsorbierten Wassermenge über den gesamten Druckbereich bestimmt. Der Selektivitätsfaktor ist ein Maß für die Selektivität der $CO_2$-Adsorption im Vergleich zu $H_2O$ in feuchter Luft:

Selektivitätsfaktor (SF):

$$SF = \frac{n_{ads}CO_2\left[\frac{mmol}{g}\right]}{n_{ads}H_2O\left[\frac{mmol}{g}\right]}$$

$n_{ads}CO_2$ ist dabei die Stoffmenge an adsorbiertem $CO_2$. $n_{ads}H_2O$ ist dabei die Stoffmenge an adsorbiertem $H_2O$.

Ein Selektivitätsfaktor größer als 1 bedeutet, dass das Sorptionsmaterial selektiver für $CO_2$ ist, während niedrigere Werte als 1 auf eine dominierende $H_2O$-Adsorption hinweisen.

Der Selektivitätsfaktor ist abhängig vom Druck des Wassers ($CO_2$).

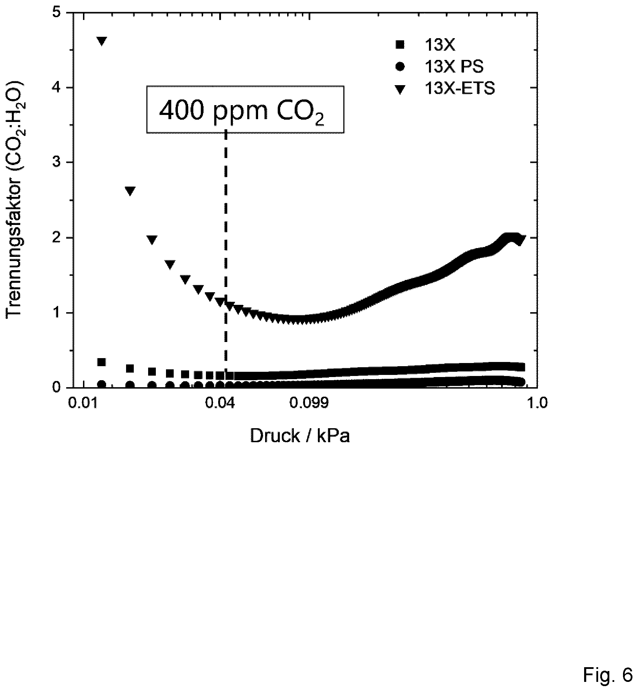

Auf der Grundlage der Modifizierung des 13-X-Zeoliths wurde gezeigt, dass das ETSmodifizierte Material eine höhere $CO_2$-Selektivität bei einem Druck von 0,04 kPa $CO_2$ (entspricht 400 ppm $CO_2$) oder weniger aufweist (siehe Fig. 6).

Unmodifiziertes oder PS-modifiziertes 13X-Zeolith-Material zeigte ein ähnliches Verhalten, wobei der Selektivitätsfaktor bei allen Druckstudien immer größer als 1 war.

2.4. In-situ-Röntgenbeugungsmessungen:

Um die thermische Stabilität des unmodifizierten und modifizierten Zeolithmaterials (d. h. 13X-Zeolith) zu testen, wurden Röntgenbeugungsmessungen unter einem Stickstoffstrom durchgeführt, nachdem die Katalysatoren von Raumtemperatur auf 450 °C erhitzt wurden. Damit wurde untersucht, ob während der thermischen Desorption oder der Trocknung vor der Adsorption eine Strukturveränderung stattfindet. Die Messungen wurden wie folgt durchgeführt: Die Probe wurde bei Raumtemperatur mit einem Stickstoffstrom gespült, um jegliche Luft oder physikalisch gebundenes Wasser zu entfernen.

Die Temperatur wurde dann in voreingestellten Schritten (5°C min-1) von Raumtemperatur auf 450°C erhöht.

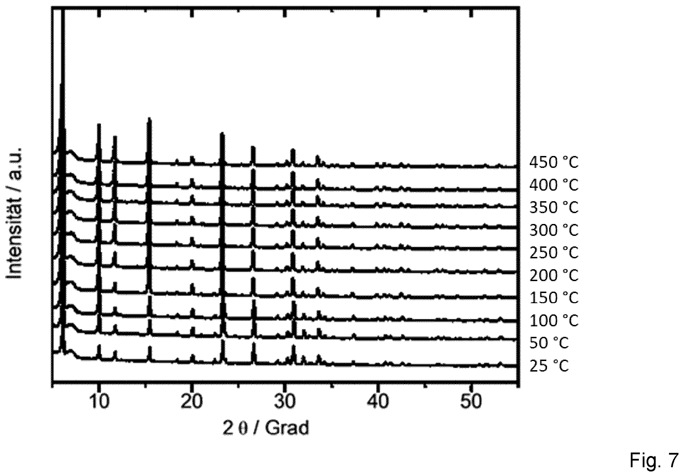

Eine Reihe von Röntgendiffraktogrammen wurde während der Aufheizrampe aufgenommen. Die am unmodifizierten 13X-Zeolith gesammelten XRD-Daten zeigten im Wesentlichen keine Veränderung über den gesamten Temperaturbereich (siehe Fig. 7).

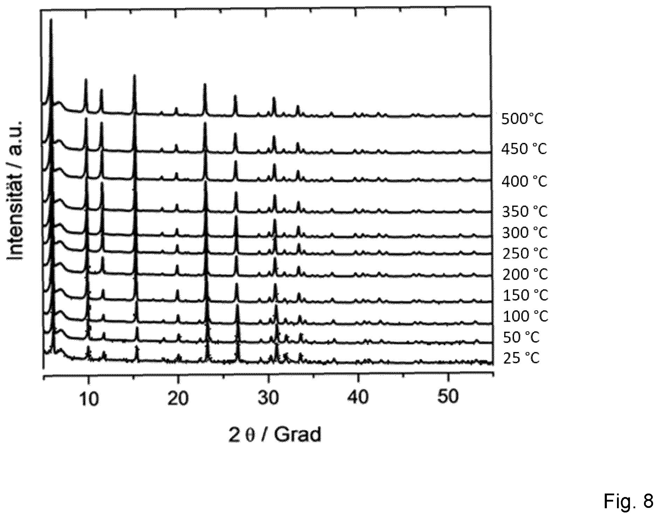

Ähnliche Messungen an der modifizierten Probe (mit 2 Gew.-% Polystyrol) ergaben ebenfalls im Wesentlichen keine Veränderung während des Heizvorgangs (siehe Fig. 8).

Diese Ergebnisse zeigen die Eignung dieser Zeolithe und ihrer modifizierten Versionen für diese Zyklusexperimente, die im Wesentlichen bei niedrigeren Temperaturen durchgeführt werden.

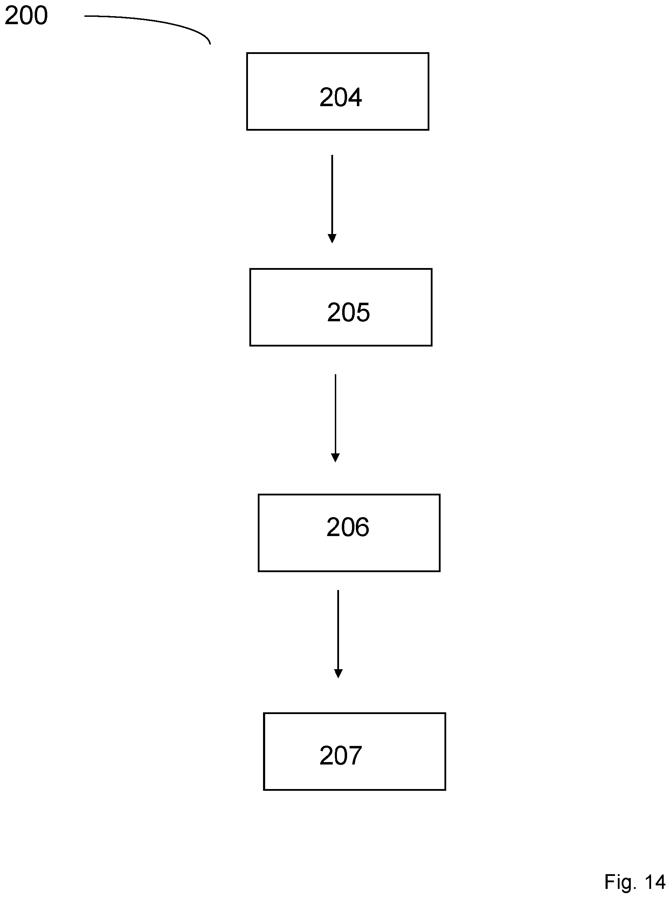

Fig. 14 zeigt schematisch ein Verfahren zur Herstellung eines Sorptionsmaterials 200 umfassend Zeolithpartikel mit hydrophober Beschichtung umfassend die Schritte:

- Vorlegen von Zeolithpartikel 204,
- Inkontaktbringen der Zeolithpartikel mit mindestens einem organischen Polymer und/oder mit mindestens einem Silan 205,
- optionaler Pyrolyse 206 der Zeolithpartikel und dem mindestens einem organischen Polymer und/oder dem mindestens einem Silan und
- optionalem Trocken 207 der Zeolithpartikel und des mindestens einen organischen Polymers und/oder des mindestens eines Silans.

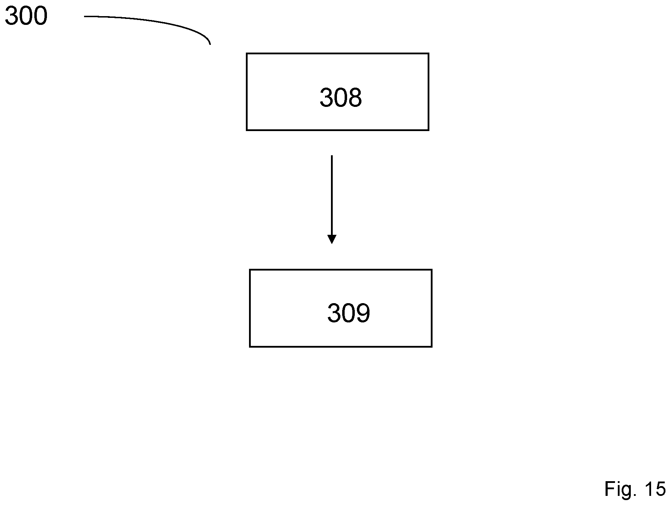

Fig. 15 zeigt schematisch ein Verfahren zur Sorption von Kohlendioxid 300. Das Verfahren umfasst den Schritt der Adsorption von Kohlendioxid 308 durch Inkontaktbringen mindestens eines Sorptionsmaterials mit Kohlendioxid. Optional erfolgt die Desorption von Kohlendioxid 309 durch Erwärmen des mindestens einen Sorptionsmaterials mit adsorbiertem Kohlendioxid.

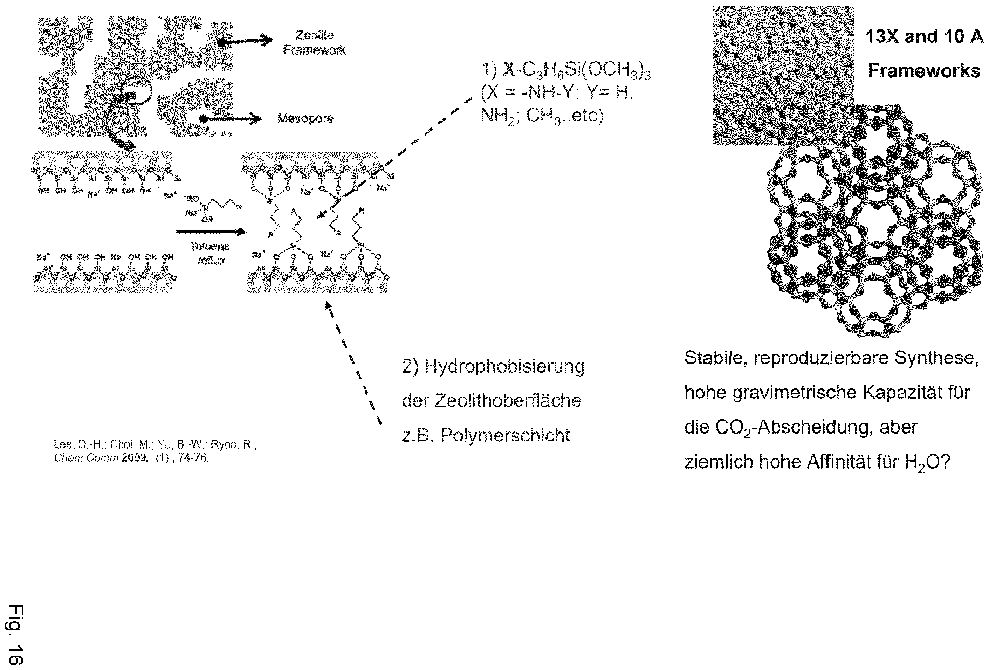

Fig. 16 zeigt eine Übersicht der Modifizierung von Zeolithen zur Adsorption von $CO_2$. Eine Zeolithstruktur weist Mesoporen auf. Durch Reaktion mit einem geeigneten Reagens kann die Oberfläche des Zeolithen hydrophobisiert werden.

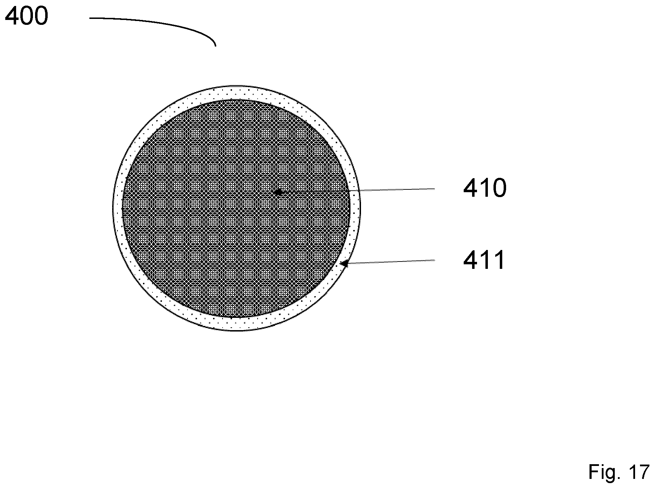

Fig. 17 zeigt schematisch einen Zeolithpartikel mit hydrophober Beschichtung. Dabei wird der Sorptionspartikel 400 mit Zeolith 410 und hydrophober Beschichtung 411 dargestellt.

Bezugszeichenliste

| | |
|---|---|
| 100 | Adsorptionsaufbau |
| 101 | Gasfluss |
| 102 | Vorrichtung umfassend Sorptionspartikel |
| 103 | Massenspektrometer |
| 200 | Verfahren zur Herstellung eines Sorptionsmaterials |
| 204 | Vorlegen von Zeolithpartikel |
| 205 | Inkontaktbringen der Zeolithpartikel mit mindestens einem organischen Polymer und/oder mit mindestens einem Silan |
| 206 | Pyrolyse |
| 207 | Trocknen |
| 300 | Verfahren zur Sorption von Kohlendioxid |
| 308 | Adsorption von Kohlendioxid |
| 309 | Desorption von Kohlendioxid |
| 400 | Sorptionspartikel |
| 410 | Zeolith |
| 411 | hydrophobe Beschichtung |

**Patentansprüche**

1. Sorptionsmaterial umfassend Zeolithpartikel mit hydrophober Beschichtung.

2. Sorptionsmaterial nach Anspruch 1, wobei die hydrophobe Beschichtung ausgewählt ist aus Polymeren, Kohlenstoffmodifikationen und/oder Silan.

3. Sorptionsmaterial nach Anspruch 1 oder 2, wobei der Zeolithpartikel ausgewählt ist aus 13x-Zeolith oder 5A-Zeolith.

4. Verfahren zur Herstellung eines Sorptionsmaterials umfassend Zeolithpartikel mit hydrophober Beschichtung umfassend die Schritte:

   - Vorlegen von Zeolithpartikel,
   - Inkontaktbringen der Zeolithpartikel mit mindestens einem organischen Polymer und/oder mit mindestens einem Silan.

5. Verfahren nach Anspruch 4, wobei es sich bei dem organischen Polymer um ein phenylhaltiges Polymer handelt.

6. Verfahren nach Anspruch 4 oder 5, wobei das organische Polymer ausgewählt ist aus der Gruppe bestehend aus Polystyrol, Polypropylen, Polyethylen, Polyanilin, Polyoxymethylen, Polytetrafluorethylen (PTFE), Polyvinylpyridin, Polyamide, Polymethmethacrylat, Polyole, Cellulose, Polymilchsäure, Polyhydroxybutyrat, Polybutadien und Mischungen davon.

7. Verfahren nach mindestens einem der Ansprüche 4 bis 6, wobei der Zeolithpartikel ausgewählt ist aus 13x-Zeolith oder 5A-Zeolith.

8. Verfahren nach mindestens einem der Ansprüche 4 bis 7, ferner umfassend den Schritt:

   - Pyrolisieren der Zeolithpartikel und mindestens einem organischen Polymer und/oder mindestens eines Silans.

9. Verfahren nach Anspruch 8, wobei die Pyrolyse unter Inertgasatmosphäre durchgeführt wird.

10. Verfahren nach mindestens einem der Ansprüche 4 bis 9, ferner umfassend den Schritt:

    - Trocknen der Zeolithpartikel und des mindestens einen organischen Polymers und/oder des mindestens einen Silans.

11. Sorptionsmaterial hergestellt nach einem Verfahren nach mindestens einem der Ansprüche 4 bis 10.

12. Verwendung eines Sorptionsmaterials nach mindestens einem der Ansprüche 1 bis 3 oder 11 zur Adsorption von Kohlendioxid.

13. Verfahren zur Sorption von Kohlendioxid umfassend den Schritt:

    - Adsorption von Kohlendioxid durch Inkontaktbringen mindestens eines Sorptionsmaterials nach mindestens einem der Ansprüche 1 bis 3 oder 11 mit Kohlendioxid.

14. Verfahren nach Anspruch 13, ferner umfassend den Schritt:

    - Desorption von Kohlendioxid durch Erwärmen des mindestens einen Sorptionsmaterials mit adsorbiertem Kohlendioxid.

15. Verfahren nach Anspruch 14, wobei das Erwärmen auf eine Temperatur >30°C, vorzugsweise >50°C, weiter bevorzugt >80°C erfolgt.

100

101
Gasstrom
Luft, 1 bar
400 ppm CO2"
Luft,ads
+ H2O
102
Adsorptionsmittel
1-10 g
2.5 cm
23 cm
CO2,des
Ar,spülen
103
Massenspektrometer
Δ CO2
Δ H2O

Fig. 1

Desorption
800
600
400
200
0
Sättigung
Adsorption
CO2 Konzentration [ppm]
Temperatur [°C]
Zeit

Fig. 2

800
600
400
200
0
0
50
100
150
200
250
feucht
trocken
$CO_2$ Konzentration / ppm
Zeit / min

Fig. 3a

5
4
3
2
1
0
50
100
150
200
250
feucht
trocken
Ionenstrom / $10^{-12}$ A
Zeit / min

Fig. 3b

0.5
0.4
0.3
0.2
0.1
0.0
$CO_2$ Aufnahme / $mmol_{CO2}$ $g_{adsorbent}^{-1}$
trocken
feucht
13X
13X-ETS
13X-PS


Fig. 4

2.0
1.5
1.0
0.5
Ionenstrom / $10^{-12}$ A
ETS modifiziert 13X
PST modifiziert 13X
unmodifiziert 13X
195°C
136°C
74°C
0
50
100
150
200
Zeit / min


Fig. 5

400 ppm CO2
13X
13X PS
13X-ETS
Trennungsfaktor (CO2:H2O)
Druck / kPa
0
1
2
3
4
5
0.01
0.04
0.099
1.0


Fig. 6

Intensität / a.u.
2 θ / Grad
10
20
30
40
50
450 °C
400 °C
350 °C
300 °C
250 °C
200 °C
150 °C
100 °C
50 °C
25 °C

Fig. 7

Intensität / a.u.
500°C
450 °C
400 °C
350 °C
300 °C
250 °C
200 °C
150 °C
100 °C
50 °C
25 °C
10
20
30
40
50
2 θ / Grad

Fig. 8

CO2 Adsorption bei 5 °C - 400 ppm CO2
CO2 Konzentration / ppm
Zeit / min
0
50
100
150
200
40
80
120
160

Fig. 9a

Desorption bei unterschiedlichen Temperaturen im Argonstrom
CO2 Konzentration / ppm
Zeit / min
29 min
61 min
60 °C (Exp 1)
80 °C (Exp 2)
100 °C (Exp 3)
120 °C (Exp 4)
0
500
1000
1500
2000
2500
3000
30
60
90
120
150
180

Fig. 9b

## $CO_2$ Adsorption bei 5 °C - 400 ppm $CO_2$

CO2 Konzentration / ppm
Zeit / min
0
50
100
150
200
250
300

Fig. 10a

## Desorption bei unterschiedlichen Temperaturen im Argonstrom

32 min
64 min
60 °C Exp (1)
80 °C Exp (2)
100 °C Exp (3)
120 °C Exp (4)
CO2 Konzentration / ppm
Zeit / min
0
1000
2000
3000
4000
30
60
90
120
150
180

Fig. 10b

$CO_2$ Aufnahme bei 5°C
trocken
feucht
$CO_2$ Konzentration / ppm
Zeit / min
0
200
400
600
800
1000
0
50
100
150
200
250


Fig. 11a

$H_2O$ Aufnahme bei 5°C
trocken
feucht
Durchbruch (Sättigung)
50 min früher*
Ionenstrom / $10^{-12}$ A
Zeit / min
1
2
3
4
5
0
50
100
150
200
250


Fig. 11b

$CO_2$ Aufnahme bei 5°C
feucht
trocken
$CO_2$ Konzentration / ppm
0
200
400
600
800
1000
0
50
100
150
200
250
Zeit / min

Fig. 12a

$H_2O$ Aufnahme bei 5°C
feucht
trocken
Ionenstrom / $10^{-12}$ A
2
4
6
Durchbruch (Sättigung)
110 min früher*
0
50
100
150
200
250
300
Zeit / min

Fig. 12b

unmodifiziert 13X
PST modifiziert 13X
H2O-BET
V_ads / mmol g-1
Druck / kPa


Fig. 13a

unmodifizert 13X
PST modifiziert 13X
CO2-BET
V_ads / mmol g-1
Druck / kPa


Fig. 13b

200
204
205
206
207

Fig. 14

300
308
309

Fig. 15

Zeolite Framework
Mesopore
Toluene reflux
1) **X**-$C_3H_6Si(OCH_3)_3$ (X = -NH-Y: Y= H, $NH_2$; $CH_3$..etc)
2) Hydrophobisierung der Zeolithoberfläche z.B. Polymerschicht
Lee, D.-H.; Choi, M.; Yu, B.-W.; Ryoo, R., *Chem.Comm* **2009,** (1) , 74-76.
**13X and 10 A Frameworks**
Stabile, reproduzierbare Synthese, hohe gravimetrische Kapazität für die $CO_2$-Abscheidung, aber ziemlich hohe Affinität für $H_2O$?

Fig. 16

400
410
411

Fig. 17

Europäisches Patentamt
European Patent Office
Office européen des brevets

# EUROPÄISCHER RECHERCHENBERICHT

Nummer der Anmeldung
EP 24 18 5345

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHAO TAN ET AL: "Microporous carbon coated zeolite particles for efficient carbon capture from wet flue gas", SEPARATION AND PURIFICATION TECHNOLOGY, Bd. 317, 14. April 2023 (2023-04-14), Seite 123762, XP093226260, NL ISSN: 1383-5866, DOI: 10.1016/j.seppur.2023.123762 * Zusammenfassung * * Abschnitt: "3.1. Preparation of microporous carbon coated 13X (13X@MPC)"; Seite 2 - Seite 3 * * Abschnitt: "3.6 Carbon capture from wet flue gas application"; Seite 6 * ----- | 1-4,7-15 | INV. B01J20/18 B01D53/04 B01D53/62 B01J20/20 B01J20/24 B01J20/26 B01J20/30 B01J20/32 |
| X | KIM MINJAE ET AL: "CO2 adsorption on zeolite 13X modified with hydrophobic octadecyltrimethoxysilane for indoor application", JOURNAL OF CLEANER PRODUCTION, ELSEVIER, AMSTERDAM, NL, Bd. 337, 18. Januar 2022 (2022-01-18), XP086952017, ISSN: 0959-6526, DOI: 10.1016/J.JCLEPRO.2022.130597 [gefunden am 2022-01-18] * Zusammenfassung * * Abschnitt: "2.1. Method of hydrophobic functionalization of zeolite 13X"; Seite 3 * * Abschnitt: "2.3. CO2 and moisture adsorption test"; Seite 3 * * Abschnitt: "3.4. CO2 and moisture adsorption cyclic test"; Seite 7 * ----- -/-- | 1-4,7, 10-15 | RECHERCHIERTE SACHGEBIETE (IPC): B01J B01D |

Der vorliegende Recherchenbericht wurde für alle Patentansprüche erstellt

1

| Recherchenort | Abschlußdatum der Recherche | Prüfer |
|---|---|---|
| Den Haag | 20. November 2024 | Klemps, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 24 18 5345

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/119808 A1 (EXXONMOBIL RES & ENG CO [US]; YEGANEH MOHSEN S [US] ET AL.) 29. September 2011 (2011-09-29) * Beispiel 1 * * Beispiele 10-12 * ----- | 1-4,7, 10-15 | |
| X | US 2017/189859 A1 (CHEN YUDONG [US] ET AL) 6. Juli 2017 (2017-07-06) * Absatz [0034]; Ansprüche 1, 3, 8 * * Absatz [0067] * ----- | 1,2,4-6, 8,9, 11-13 | |

RECHERCHIERTE SACHGEBIETE (IPC)

Der vorliegende Recherchenbericht wurde für alle Patentansprüche erstellt

1

| Recherchenort | Abschlußdatum der Recherche | Prüfer |
|---|---|---|
| Den Haag | 20. November 2024 | Klemps, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 18 5345

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2024

| Im Recherchenbericht angeführtes Patentdokument | Datum der Veröffentlichung | Mitglied(er) der Patentfamilie | Datum der Veröffentlichung |
|---|---|---|---|
| WO 2011119808 A1 | 29-09-2011 | CA 2792488 A1 | 29-09-2011 |
| | | CN 102971071 A | 13-03-2013 |
| | | EP 2550096 A1 | 30-01-2013 |
| | | JP 2013523424 A | 17-06-2013 |
| | | SG 183863 A1 | 30-10-2012 |
| | | US 2011232493 A1 | 29-09-2011 |
| | | US 2013288883 A1 | 31-10-2013 |
| | | WO 2011119808 A1 | 29-09-2011 |
| US 2017189859 A1 | 06-07-2017 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **HOROWITZ, C. A.** Paris Agreement. *International Legal Materials*, 2016, vol. 55 (4), 740-755
- **MAC DOWELL, N.** ; **FENNELL, P. S.** ; **SHAH, N.** ; **MAITLAND, G. C.** The role of CO2 capture and utilization in mitigating climate change. *Nature Climate Change*, 2017, vol. 7 (4), 243-249
- Chemical Batteries with CO. **SCHLÖGL, R.** Angewandte Chemie. 2022, vol. 61, e202007397
- **JUNG, C. H.** ; **KIM, G. W.** ; **HAN, S. H.** ; **LEE, Y. M.** Gas separation of pyrolyzed polymeric membranes: Effect of polymer precursor and pyrolysis conditions. *Macromolecular Research*, 2007, vol. 15 (6), 565-574
- **SHI, L.** ; **LAI, L. S.** ; **TAY, W. H.** ; **YEAP, S. P.** ; **YEONG, Y. F.** Membrane Fabrication for Carbon Dioxide Separation: A Critical Review. *ChemBioEng Reviews*, 2022, vol. 9 (6), 556-573
- **ANDERSON, C. J.** ; **PAS, S. J.** ; **ARORA, G.** ; **KENTISH, S. E.** ; **HILL, A. J.** ; **SANDLER, S. I.** ; **STEVENS, G. W.** Effect of pyrolysis temperature and operating temperature on the performance of nanoporous carbon membranes. *Journal of Membrane Science*, 2008, vol. 322 (1), 19-27
- **SWITZER, J. R.** ; **ETHIER, A. L.** ; **HART, E. C.** ; **FLACK, K. M.** ; **RUMPLE, A. C.** ; **DONALDSON, J. C.** ; **BEMBRY, A. T.** ; **SCOTT, O. M.** ; **BIDDINGER, E. J.** ; **TALREJA, M. et al.** Design, synthesis, and evaluation of nonaqueous silylamines for efficient CO2 capture. *ChemSusChem*, 2014, vol. 7 (1), 299-307
- **LUEBKE, D.** ; **MYERS, C.** ; **PENNLINE, H.** Hybrid Membranes for Selective Carbon Dioxide Separation from Fuel Gas. *Energy & Fuels*, 2006, vol. 20 (5), 1906-1913